# EUROPEAN PATENT APPLICATION

(11) **EP 3 643 619 A1**
(43) Date of publication of application: **29.04.2020**
(21) Application number: 19203670.5
(22) Date of filing: 16.10.2019
(51) Int. Cl.: B64D 45/00

(54) **AIRCRAFT SKEW DETECTION SYSTEM AND METHOD OF OPERATING THE SAME**

(30) Priority: 24.10.2018 US 201862749888 P
(71) Applicant: Bombardier Inc., Dorval, Québec H4S 1Y9 (CA)
(72) Inventor: ILIESCU, Vlad, Kirkland, Québec H9J 3X5 (CA); GALLIEN, Daniel, Laval, Québec H7G 4K8 (CA); YOUNG, Robert, Montreal, Québec H4B 2L2 (CA)
(74) Representative: Holmes, Matthew William

(57) **Abstract**

There is disclosed a method of operating a skew detection system for detecting skew in a control surface of one of wings of an aircraft. The method includes receiving an inboard signal from an inboard sensor and receiving an outboard signal from an outboard sensor. The inboard and outboard sensors having lines of sight intersecting toothed surfaces of gears of the inboard and outboard gears. An inboard distance and an outboard distance travelled by the inboard and the outboard tracks respectively are determined using the inboard and outboard signals from the inboard and the outboard sensors. One of the inboard and the outboard distances is compared with a reference value. An alert indicative of an adverse situation is emitted if the one of the inboard and the outboard distances is different than the reference value.

## Description

### PRIORITY CLAIM

This application claims priority from US Provisional Patent Application No. 62/749,888, filed 24th October 2018, the entire contents of which are expressly incorporated by reference herein.

### TECHNICAL FIELD

The application relates generally to aircraft and particularly, but not exclusively, to systems and methods used for detecting aircraft slat skew.

### BACKGROUND OF THE ART

Aircraft typically have a plurality of slats that disposed within and/or at least partially define a leading edge of a wing. These slats are extendible from a retracted position to an extended position, and back. The extended position of the slats is usually used when the aircraft is landing and/or taking off. Typically the slat surface is attached to two tracks that move forward and aft, and which are supported by rollers. One track is located at each of the opposed ends of the slat surface.

To move each slat between the retracted and the extended positions, two rotary actuators, one actuating each of the tracks via a gear mechanism, are operable to induce the movement of the slat. However, in some cases, one of the two actuators and/or its associated gear mechanism may malfunction, in whole or in part, while the other remains in normal operation. This can sometimes induce an undesirable skew to the slat. Skewed slats can cause damage to other elements of the wing and may impair aerodynamic performance of the wing.

Systems and methods for detecting slat skew exist, but have drawbacks. Improvement is therefore sought.

### SUMMARY

In accordance with a first aspect, there is provided a method of operating a skew detection system for detecting skew in a control surface of one of the wings of an aircraft, the control surface connected to the wing of the aircraft via inboard and outboard tracks. The inboard and outboard tracks may be in driving engagement with inboard and outboard gears for moving the inboard and outboard tracks along longitudinal axes thereof. The method may comprise receiving an inboard signal from an inboard sensor and receiving an outboard signal from an outboard sensor. The inboard sensor may have a line of sight intersecting a toothed surface of a gear of the inboard gears. The outboard sensor may have a line of sight intersecting a toothed surface of a gear of the outboard gears. The method may comprise determining an inboard distance and an outboard distance travelled by the inboard and the outboard tracks respectively, using the inboard and outboard signals from the inboard and the outboard sensors. The method may comprise comparing one of the inboard and the outboard distances with a reference value. The method may comprise emitting an alert indicative of an adverse situation if the one of the inboard and the outboard distances is different than the reference value.

The above-defined method of the first aspect may also include one or more of the following additional steps/elements, in whole or in part, and in any combination.

The reference value may be the other of the inboard and the outboard distances, and the step of comparing the one of the inboard and the outboard distances with the reference value may include comparing the one of the inboard and the outboard distances with the other of the inboard and the outboard distances.

The reference value may be a corresponding one of inboard and outboard distances travelled by a corresponding one of inboard and outboard tracks of another control surface of the other of the wings, the control surface of the other of the wings and the control surface of the one of the wings being located at corresponding spanwise locations, and the step of comparing the one of the inboard and the outboard distances with the reference value may include comparing the one of the inboard and the outboard distances with the corresponding one of the inboard and the outboard distances.

Determining the inboard distance and the outboard distance travelled by the inboard and outboard tracks respectively may include counting an inboard number of teeth of the toothed surface of the gear of the inboard gears that passes via the line of sight of the inboard sensor and counting an outboard number of teeth of the toothed surface of the gear of the outboard gears that passes via the line of sight of the outboard sensor.

The inboard gears may include a rack gear and a pinion gear meshed with the rack gear, and counting the inboard number of teeth of the toothed surface of the gear of the inboard gears may include counting the number of teeth of the rack gear.

Determining the inboard distance and the outboard distance may include determining an inboard number of teeth and an outboard number of teeth that passes through the lines of sight and multiplying the inboard and outboard numbers of teeth by a tooth pitch.

The inboard and outboard signals may vary in a sinusoidal manner between a maximum value and a minimum value, and determining the inboard and outboard numbers of teeth may include determining inboard and outboard numbers of cycles of the inboard and outboard signals.

In accordance with a second aspect, there is provided a skew detection system for detecting skewing during movement of a control surface of a wing of an aircraft. The system may comprise inboard and outboard tracks each secured to a respective one of inboard and outboard sides of the control surface, the inboard and outboard tracks in driving engagement with inboard and outboard gears for moving the control surface. The system may comprise inboard and outboard sensors each secured to the wing adjacent a respective one of the inboard side and the outboard side of the control surface, the inboard sensor having a line of sight intersecting a toothed surface of a gear of the inboard gears, the outboard sensor having a line of sight intersecting a toothed surface of a gear of the outboard gears, the inboard and outboard sensors generating signals indicative of the toothed surfaces moving through to the lines of sight. The system may comprise a controller in communication with the inboard and outboard sensors and receiving the signals therefrom. The controller may be configured for determining an inboard distance and an outboard distance travelled by the toothed surfaces relative to the lines of sight of the inboard and outboard sensors from the signals. The controller may be configured for comparing one of the inboard distance and the outboard distance with a reference value and for issuing an alert indicative of an adverse situation when the one of the inboard distance and the outboard distance is different than the reference value.

The above-defined skew detection system of the second aspect may also include one or more of the following additional elements/features, in whole or in part, and in any combination:

The reference value may be the other of the inboard and the outboard distances.

The other wing of the aircraft may have a control surface located at a spanwise position on the other wing corresponding to that of the control surface of the wing. The skew detection system may further comprise second inboard and outboard sensors each secured to the other of the wings and adjacent a respective one of an inboard side and an outboard side of the control surface of the other of the wings. The second inboard sensor may have a line of sight intersecting a toothed surface of a gear of second inboard gears. The second outboard sensor may have a line of sight intersecting a toothed surface of a gear of second outboard gears. The second inboard gears and the second outboard gears may be configured for driving engagement with inboard and outboard tracks of the control surface of the other of the wings. The second inboard and outboard sensors may be configured to generate signals indicative of the toothed surfaces moving relative to the lines of sight, the reference value being a corresponding one of a second inboard distance and a second outboard distance.

Each of the inboard gears and the outboard gears may include a rack gear and a pinion gear in driving engagement with the rack gear. The rack gears may be secured to the inboard and outboard tracks. The pinion gears may be configured for driving engagement with actuators.

The gear of the inboard gears and the gear of the outboard gears may be the rack gears.

The inboard and outboard sensors may include two inboard sensors and two outboard sensors. The controller may be configured to receive signals from the two inboard sensors and from the two outboard sensors.

Each of the two inboard sensors may have a line of sight intersecting the toothed surface of the gear of the inboard gears and each of the two outboard sensors may have a line of sight intersecting the toothed surface of the gear of the outboard gears.

One of the two inboard sensors may have a line of sight intersecting the toothed surface of the gear of the inboard gears. The other of the two inboard sensors may have a line of sight intersecting a toothed surface of another gear of the inboard gears. One of the two outboard sensors may have a line of sight intersecting the toothed surface of the gear of the outboard gears. The other of the two outboard sensors may have a line of sight intersecting a toothed surface of another gear of the outboard gears.

In accordance with a third aspect, there is provided a method of operating a system for detecting skewing of a control surface of an aircraft wing, the control surface connected to the wing via inboard and outboard tracks, the inboard and outboard tracks in driving engagement with inboard and outboard gears for moving the inboard and outboard tracks along longitudinal axes thereof. The method may comprise receiving an inboard signal from an inboard sensor and receiving an outboard signal from an outboard sensor. The inboard sensor may have a line of sight intersecting a toothed surface of a gear of the inboard gears. The outboard sensor may have a line of sight intersecting a toothed surface of a gear of the outboard gears. The method may comprise counting an inboard number of teeth of the gear of the inboard gears that cross the line of sight of the inboard sensor using the inboard signal and counting an outboard number of teeth of the gear of the outboard gears that cross the line of sight of the outboard sensor using the outboard signal. The method may comprise comparing one of the inboard and the outboard number of teeth with a reference value. The method may comprise emitting an alert indicative of an adverse situation if the one of the inboard and the outboard number of gear teeth is different than the reference value.

The above-defined method of the third aspect may also include one or more of the following additional steps/elements, in whole or in part, and in any combination:

the reference value is the other of the inboard and the outboard numbers of teeth, and comparing the one of the inboard and the outboard numbers of teeth with the reference value includes comparing the one of the inboard and the outboard numbers of teeth with the other of the inboard and the outboard numbers of teeth;

The reference value may be a corresponding one of inboard and outboard numbers of teeth travelled by a corresponding one of inboard and outboard tracks of another control surface of the other of the wings, the control surface of the other of the wings and the control surface of the one of the wings being located at corresponding spanwise locations. The step of comparing the one of the inboard and the outboard numbers of teeth with the reference value may include comparing the one of the inboard and the outboard numbers of teeth with the corresponding one of the inboard and the outboard numbers of teeth.

The inboard gears may include a rack gear and a pinion gear meshed with the rack gear, and counting the inboard number of teeth of the toothed surface of the gear of the inboard gears may include counting the number of teeth of the rack gear.

The inboard and outboard signals may vary in a sinusoidal manner between a maximum value and a minimum value, and determining the inboard and outboard numbers of teeth may include determining inboard and outboard numbers of cycles of the inboard and outboard signals.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

Embodiments of the invention will now be described, by way of example only, with reference to the accompanying drawings, in which:
Fig. 1 is a schematic three-dimensional view of an aircraft;
Fig. 2 is a schematic top view of a slat assembly including a skew detection system in accordance with a particular embodiment;
Fig. 3 is a schematic top view of a pair of slat assemblies including a skew detection system in accordance with a particular embodiment;
Fig. 4 is a schematic three-dimensional view of one side of the slat assembly and skew detection system of Fig. 2, in accordance with an embodiment;
Fig. 4a is a schematic side view of the slat assembly and skew detection system of Fig. 4; and
Fig. 5 is a schematic three-dimensional view of one side of the slat assembly and skew detection system of Fig. 2, in accordance with an embodiment.

### DETAILED DESCRIPTION

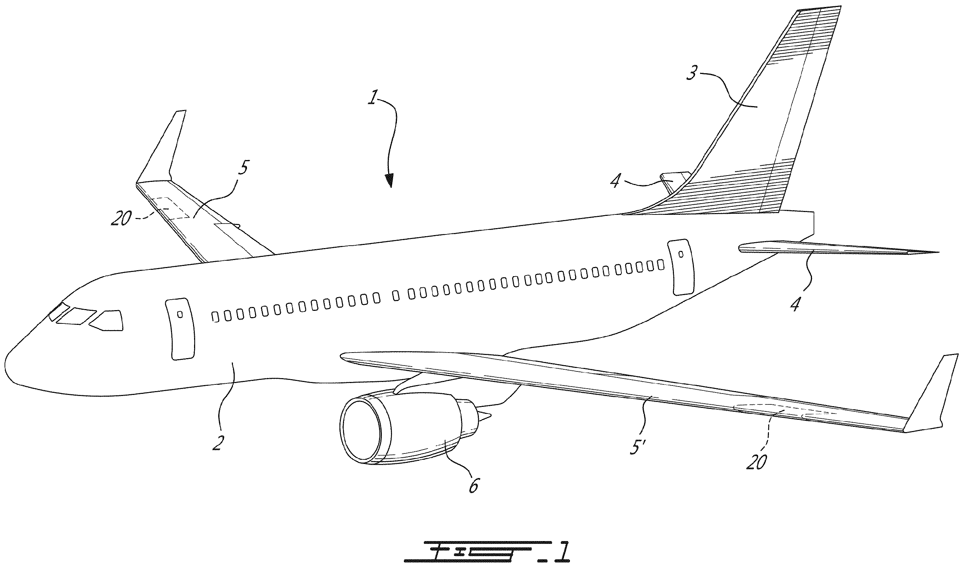

Referring to the drawings and more particularly to Fig. 1, an aircraft is shown at 1, and is generally described to illustrate some components for reference purposes in the present disclosure. The aircraft 1 has a fuselage 2 having a fore end at which a cockpit is located, and an aft end supporting a tail assembly, with the passenger cabin generally located between the cockpit and the tail assembly. The tail assembly comprises a vertical stabilizer 3 with a rudder, and horizontal stabilizers 4 with elevators. The tail assembly has a fuselage-mounted tail, but other configurations may also be used for the aircraft 1, such as cruciform, T-tail, etc. Wings 5, 5' project laterally from the fuselage. The aircraft 1 has engines 6 supported by the wings 5, 5', although the engines 6 could also be mounted to the fuselage 2. The aircraft 1 is shown as a jet-engine aircraft, but may also be a propeller aircraft.

In addition, the wings 5, 5' are equipped with a plurality of control surfaces, of which of interest to this application are the deployable sections 20, 20', which are referred to as slats when located at the leading edges of the wings 5, 5'. Herein below, the terms "control surfaces" and "deployable sections" are used interchangeably. The deployable sections are referred herein below as the slats 20, 20', but may be other control surfaces. The slats 20, 20' are control surfaces which alter the lift augmentation of the wings 5, 5' of the aircraft 1. In particular, the slats 20, 20' are configured for being positioned in a retracted mode, for example during most flight phases, and a deployed mode, where altered wing aerodynamic characteristics are provided, for example during take-off and landing. In some embodiments, the slats 20, 20' are configured to be deployed or retracted along a spectrum between a fully-deployed position and a fully-retracted position. The wings 5, 5' may also be equipped with other control surfaces, for example flaps, and the like. Although the foregoing discussion focuses primarily on the leading-edge slat, it should be noted that the description may be applied to any other control surfaces and flight components generally, including the flaps.

By altering the wing aerodynamic characteristics of the aircraft 1, the slats 20, 20' can adjust various flight requirements for the aircraft 1. For example, when the slats 20, 20' are deployed, the aircraft 1 is able to fly at lower speeds to allow for take-off or landing in shorter distances. In another example, slats 20, 20' are deployed during take-off and landing maneuvers. However, during other flight phases, the slats are typically retracted to minimize drag.

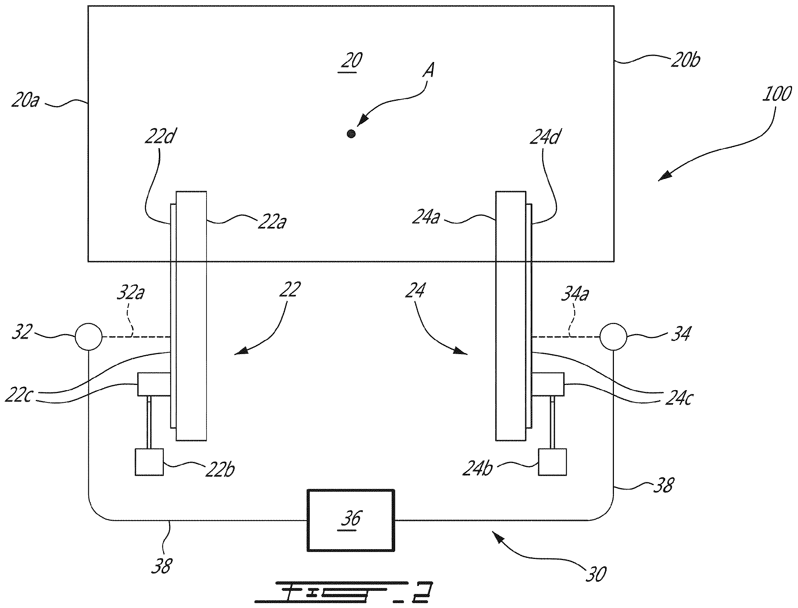

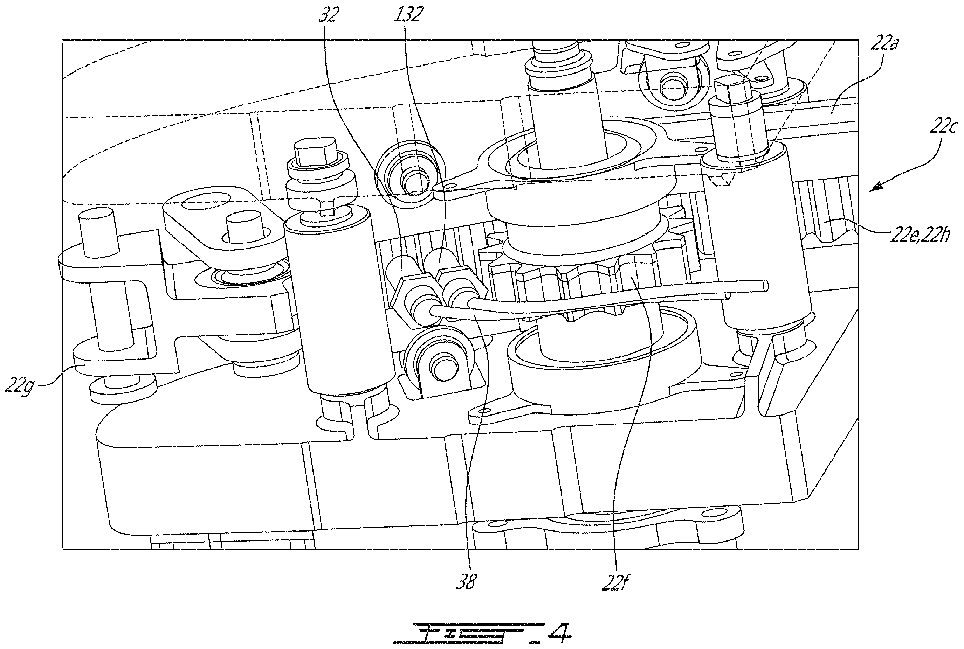

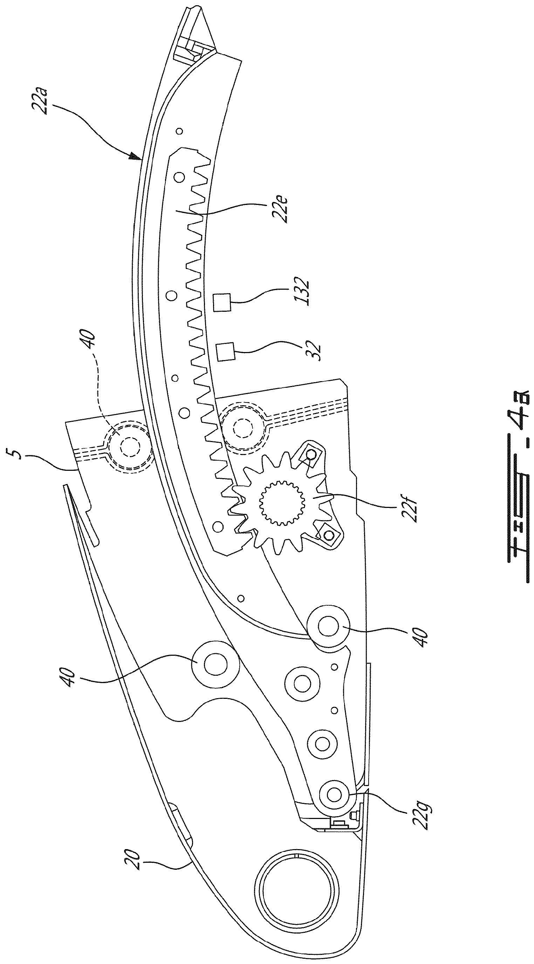

Referring now to Fig. 2, each of the slats 20, 20' are part of a slat assembly, an example of which is shown generally at 100. Each of the slat assemblies is made up of the slat 20 itself which is a structural panel and a pair of slat driving assemblies, namely an inboard slat driving assembly 22 and an outboard slat driving assembly 24 each located respectively adjacent an inboard side 20a and an outboard side 20b of the slat panel 20. The slat driving assemblies 22, 24 are operatively connected to the wing 5 and to the slat 20 for moving the slat 20 relative to the wing 5 between the deployed and retracted positions. The slat driving assemblies 22, 24 are connected to the slat 20 at their forward end and may be supported by the wing 5 via rollers 40 (Fig. 4a). As described below, rotation of an actuator is translated in forward and aft displacement of the tracks via rack and pinion mechanisms.

The slat panel 20 may be made of any suitably rigid material. For example, the slat panel 20 is made of any one or more composite materials, including fiberglass, carbon fiber, polymers, and the like, or any suitable metal, for example titanium, aluminium, and the like. The slat panel 20 has defined therein one or more suitable attachment features for mating with tracks. The number of attachments may be 2, 3, 4, or any other suitable number, and varies to match the number of tracks.

Although the slat panel 20 is illustrated as having a rectangular shape, it should be noted that this is for ease of illustration. The slat panel 20 may take on any suitable shape, size, thickness, orientation, and the like, as is conducive to adjusting the wing lift of the aircraft.

Only the inboard slat driving assembly 22 is described herein below. It is understood that the below description may apply to all of the slat driving assemblies 22, 24.

The inboard slat driving assembly 22 includes an inboard track 22a attached or secured adjacent to the inboard side 20a of the slat 20. The inboard slat driving assembly 22 further includes an inboard actuator 22b that may be secured to the wing 5, and inboard gears 22c drivingly engaged by the inboard actuator 22b and that are in driving engagement with the inboard track 22a for moving the inboard side 20a of the slat 20. Any suitable type of actuator may be used, including electrical actuators, hydraulic actuators, rotary geared actuators, and the like. In some embodiments, the actuator 22b is located in or otherwise attached to the slat panel 20. In other embodiments, the actuator 22b may be located within the wing 5 and is coupled to the slat panel 20 and/or the track 22a in any suitable fashion. Rotational movement of the actuator 22b is transmitted to the inboard and outboard tracks 22a, 24a via the inboard and outboard gears 22c, 24c.

The tracks 22a, 24a serve to guide the movement of the slat panel 20, thereby allowing the slat 20 to move between retracted and deployed positions. In some embodiments, the tracks 22a, 24a include attachment features which are configured for mating with complementary attachment features located on a surface of the slat panel 20.

However, if the actuators 22b, 24b of the inboard and outboard slat driving assemblies 22, 24 are not properly synchronized, if one or more of the actuators fails or malfunctions, or if there is any failure in the drive mechanism between the actuator and the slat panel 20, the slat panel 20 may move asymmetrically, thereby developing skew. For example, an actuator may jam, or become disconnected from the slat panel 20, thereby causing asymmetric movement of the slat panel 20. In some embodiments, the disconnection of the actuator may in turn cause a jam. In other words, skewing of a slat 20 results in the slat rotating about an axis A normally intersecting the slat 20.

Still referring to Fig. 2, the slat assembly 100 further includes a skew detection system 30. The skew detection system 30 includes the inboard and outboard tracks 22a, 24a, the inboard and outboard gears 22c, 24c, a number of sensors, shown herein as inboard and outboard sensors 32, 34, and a controller 36, which interfaces with the sensors 32, 34. The sensors 32, 34 may be proximity sensors or proximity switches, or magnetic, optical, ultrasound, laser, and like sensors). The sensors 32, 34 may be secured to the wing 5 adjacent a respective one of the inboard side 20a and the outboard side 20b of the slat 20. It is understood that each type of sensors has its characteristics and the location of the sensor relative to the tracks 22a, 24a may be consequently adjusted. The sensors are located with respect to teeth of the gears in such a way so that they can detect the proximity of either a tooth or a gap between two teeth. Each sensor, depending of its type, generates an output signal that varies whether the sensors detects a tooth or a gap between two teeth. The sensor therefore changes its output when a tooth or a gap passes before it.

As illustrated, the inboard sensor 32 has a line of sight 32a intersecting a toothed surface 22d of a gear of the inboard gears 22c and the outboard sensor 34 has a line of sight 34a intersecting a toothed surface 24d of a gear of the outboard gears 24c of the outboard slat driving assembly 24. The sensors 32, 34 are configured to generate signals indicative of the toothed surfaces 22d, 24d moving relative to the lines of sight 32a, 34a. Herein, line of sight means that the sensor "sees" the toothed surface, either directly, or via reflecting means (e.g., mirrors). Preferably, the sensors are in proximity (e.g., in the vicinity) to the toothed surface.

In the present embodiment, the sensors 32, 34 generate signals that vary in amplitude from a first value when the lines of sight 32a, 34a intersect a tooth of the toothed surfaces 22d, 24d to a second value different from the first value when the lines of sight intersect a gap between two adjacent teeth of the toothed surfaces 22d, 24d. Depending on the type of sensors, the signal could be high and low voltage, high and low current, binary (0 and 1), etc. In a particular embodiment, the signals generated by the sensors 32, 34 are binary. That is, the sensors 32, 34 generate signals in the form of "0" and "1". In a particular embodiment, the value of "0" may be associated with the gap between two adjacent teeth of the toothed surface and the value of "1" may be associated with an apex of a tooth of the toothed surface.

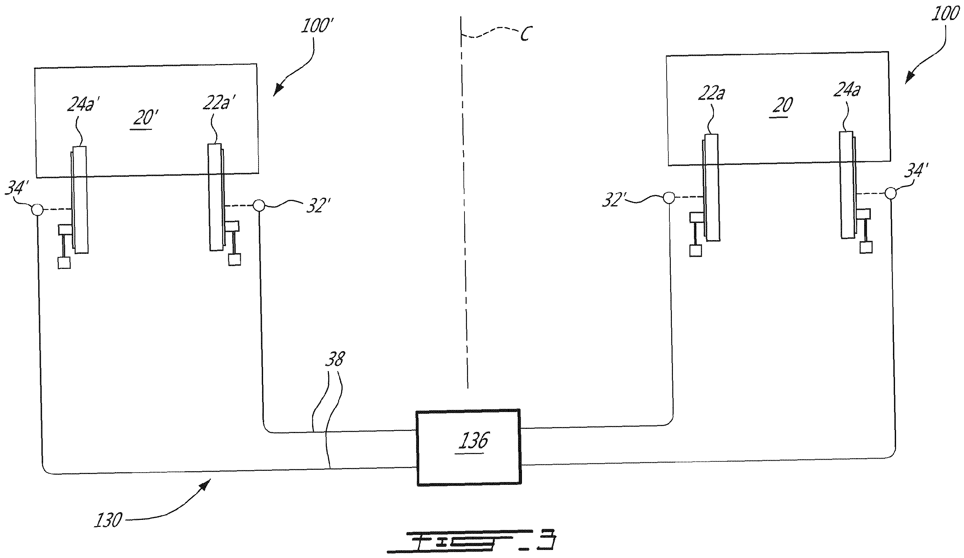

The controller 36 is in communication with the inboard and outboard sensors 32, 34 via suitable communication links 38, which may be wired or wireless, and receives the signals form the inboard and outboard sensors 32, 34. The controller 36, in one embodiment based the number of state changes in the signals generated by sensors 32 and 34, is configured for determining an inboard distance and an outboard distance travelled by the toothed surfaces 22d, 24d relative to the lines of sight 32a, 34a of the inboard and outboard sensors 32, 34 from the signals. The controller 36 compares one of the inboard distance and the outboard distance travelled by the two ends of the slat surface, when activated either to extend or to retract, with a reference value and issues an alert indicative of an adverse situation when the one of the inboard distance and the outboard distance is different from the reference value. In the embodiment shown, the reference value corresponds to the other of the inboard distance and the outboard distance. The controller 36 may take adequate action upon skew detection, by either issuing a warning to crew or shutting the system altogether. Referring now to Fig. 3, a skew detection system in accordance with another embodiment is generally shown at 130. Usually, the slat 20 on a first wing 5 is concurrently actuated with the other slat 20' on the second wing 5'. The slats 20, 20' are located at corresponding spanwise locations on the wings 5, 5'. Stated otherwise, the two slat panels 20, 20' are equidistantly located from a central axis C of the aircraft 1; the central axis C extending along the fuselage 2 of the aircraft 1. Both slats 20, 20' preferably move symmetrically in order to avoid a situation in which one of the wings 5, 5' generates more or less lift than the other.

As shown, each of the first and second wings 5, 5' includes one of slat assemblies 100, 100', which are described herein above with reference to Fig. 2.

In the embodiment shown, a controller 136 is operatively connected with both of the slat assemblies 100, 100'. More specifically, the controller 136 is in communication with the sensors 32, 34, 32', 34' of both of the slat assemblies 100, 100'. The controller 136 is configured for determining an inboard distance and an outboard distance travelled by the tracks 22a, 24a, 22a', 24a' of the slat assemblies 100, 100'. The controller 136 compares the inboard distance of the inboard track 22a of the slat assembly 100 of the first wing 5 with a reference value and issues an alert indicative of an adverse situation when the inboard distance is different from the reference value. In the embodiment shown, the reference value is the inboard distance travelled by the inboard track 22a' of the slat assembly 100' of the second wing 5'.

The controller 136 may further compare the outboard distance of the outboard track 24a of the track assembly 100 of the first wing 5 with the outboard distance of the outboard track 24a' of the track assembly 100' of the second wing 5'. The controller 136 may emit an alert indicative of an adverse situation when it detects asymmetry in the distances travelled by the tracks 22a, 24a, 22a', 24a'. More specifically, the controller may emit an alert when an unacceptable difference between the inboard distances of the inboard tracks 22a, 22a' of the track assemblies 100, 100' of the first and second wings 5, 5' is detected and/or when an unacceptable difference between the outboard distances of the outboard tracks 24a, 24a' of the track assemblies 100, 100' of the first and second wings 5, 5' is detected. In such a case, the adverse situation is an asymmetrical deployment of the slats 20, 20' of the first and second wings 5, 5'. An asymmetrical deployment may occur even if none of the slats 20, 20' of the slat assemblies 100, 100' of the first and second wings 5, 5' are skewed.

Referring now to Figs. 4 and 4a, the inboard side 20a of the slat assembly 100 is illustrated in greater detail. The below description may apply to the outboard side 20b of the slat assembly 100. As shown, the inboard gears 22c include a rack gear 22e and a pinion gear 22f meshed with the rack gear 22e. The rack gear 22e is secured to the inboard track 22a. It is understood that the inboard track 22a may be monolithic with the rack gear 22e. In the depicted embodiment, the actuator 22b (Fig. 2) is drivingly engaging with the pinion gear 22f, either directly or via a gearbox or other suitable transmission means, and the pinion gear 22f drivingly engages the rack gear 22e. In other words, the inboard track 22a is in driving engagement with the actuator 22b (Fig. 2) via the pinion gear 22f and the rack gear 22e. The inboard track 22a as a connector 22g at a free end thereof that is configured to be secured to the slat 20 that is not shown in Fig. 4 for ease of illustration. In the depicted embodiment, track supports 40 are secured to the wing 5 and assist in the movement of the track 22a. The track supports 40 may be rollers.

In the depicted embodiment, two inboard sensors 32, 132 are secured to the wing 5; each of the two inboard sensors 32, 132 having a line of sight intersecting a toothed surface 22h of the rack gear 22e. The controller 36 (Fig. 2) is in communication with the two sensors 32, 132 via links 38. Having two sensors 32, 132 may offer a better reliability in case one of the two sensors 32, 132 becomes defective. If the inboard track 22a is moving and a signal generated by one of the two sensors 32, 132 does not vary with time, it implies that the one of the two sensors 32, 132 is defective. The controller 36 may be able to compare the signals of the two sensors 32, 132 and, if, for instance, the signal generated by the one of the two sensors 32, 132 does not vary with time whereas a signal generated by the other of the two sensors 32, 132 varies with time, the controller 36 is able to ignore the one of the two sensors 32, 132 and only considers the signal generated by the other of the two sensors 32, 132 for comparison with the reference value. The controller 36 may be able to perform the same comparison for two sensors of the outboard track 24a.

In another embodiment the controller 36 may compare the signals of the two sensors on the inboard side and of the two sensors of the outboards side, and if the signal of any of the four sensors does not match the signal of the other three, the controller may conclude that the sensors with a different signal may be failed. An alert to that effect may be generated by the controller.

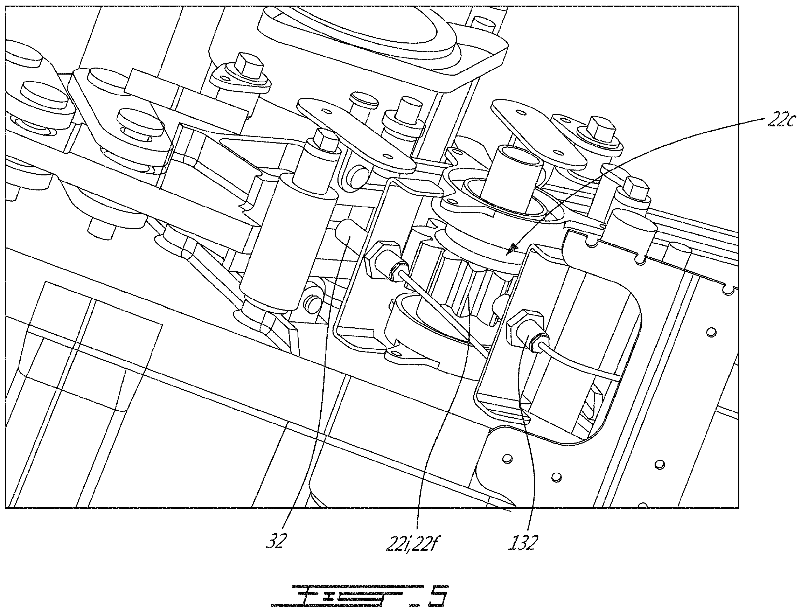

Referring now to Fig. 5, the inboard side 20a of the slat assembly 100 in accordance with another embodiment is shown. The slat assembly 100 is similar to the slat assembly described herein above with reference to Fig. 4. However, one of the two sensors 32, 132 has a line of sight that intersects the toothed surface 22h (Fig. 4) of the rack gear 22f and the other of the two sensors 32, 132 has a line of sight that intersects a toothed surface 22i of the pinion gear 22f.

Having the two sensors 32, 132 oriented toward different gears of the inboard gears 22c, and detecting separately the movement of the rack gear 22e and of the pinion 22f, may allow the controller 36 (Fig. 2) to detect a disengagement of the pinion and rack gears 22f, 22e. More specifically, the controller 36 may be able to compare the signals generated by the two sensors 32, 132. For instance, if the signal generated by the sensor 132 that is oriented toward the pinion gear 22f varies with time whereas the signal generated by the sensor 32 that is oriented toward the rack gear 22e does not vary with time, the controller 36 may conclude that the pinion gear 22f is no longer meshed, or in driving engagement with, the rack gear 22e. The controller 36 may therefore issue an alert indicative of a gear disengagement on the inboard side 22a of the slat 20.

Referring to all figures, a method of operating the skew detection system 30, 130 is described herein below. In a particular embodiment, the steps described below are carried out by the controller 36, 136. Consequently, the controller 36, 136 includes a processor and a computer readable medium in communication with the processor and having stored thereon instructions to carry the below steps by the processor.

For operating the skew detection system 30, 130, the inboard signal is received from the inboard sensor 32 and the outboard signal is received from the outboard sensor 34. An inboard distance and an outboard distance travelled by the inboard and the outboard tracks 22a, 24a are determined respectively, using the inboard and outboard signals from the inboard and the outboard sensors 32, 34. One of the inboard and the outboard distances is compared with a reference value. An alert indicative of an adverse situation is emitted if the one of the inboard and the outboard distances is different than the reference value.

In another possible embodiment, the inboard and outboard distances are compared, and, if the difference exceeds a predetermined value, the computer issues the indicative alert. In any of the embodiments, the indicative alert can result in a message given to crew, or in shutting down the slat system.

In a particular embodiment, there are two sensors detecting the movement of the inboard track, and two sensors detecting the movement of the outboard track. The controller on a first channel compares the distance traveled by the inboard and outboard tracks using the signal from two of the four sensors on opposite sides of the slat, and for redundancy, on a second channel compares the distances traveled by the tracks using the signals from the remaining two sensors. If one of the first and the second channels fails for any reason, the other of the first and the second channels is used to monitor the skew of the slat.

In a particular embodiment, the reference value is the other of the inboard and the outboard distances, and comparing the one of the inboard and the outboard distances with the reference value includes comparing the one of the inboard and the outboard distances with the other of the inboard and the outboard distances.

Referring more particularly to Fig. 3, the reference value may be a corresponding one of inboard and outboard distances travelled by a corresponding one of inboard and outboard tracks 22a', 24a' of the slat 20' of the other of the wings 5, 5'. The step of comparing the one of the inboard and the outboard distances with the reference value includes comparing the one of the inboard and the outboard distances with the corresponding one of the inboard and the outboard distances.

Referring more particularly to Fig. 2, determining the inboard distance and the outboard distance travelled by the inboard and outboard tracks 22a, 24a respectively includes counting an inboard number of teeth of the toothed surface 22d of the gear of the inboard gears 22c that passes via the line of sight 32a of the inboard sensor 32 and counting an outboard number of teeth of the toothed surface 24d of the gear of the outboard gears 24c that passes via the line of sight 34a of the outboard sensor 34. In reference to Fig. 4, counting the inboard number of teeth of the toothed surface of the gear of the inboard gears 22d includes counting the number of teeth of the toothed surface 22h of the rack gear 22e.

In the embodiment shown, determining the inboard distance and the outboard distance includes determining an inboard number of teeth and an outboard number of teeth that passes through the lines of sight 32a, 34a and multiplying the inboard and outboard numbers of teeth by a tooth pitch. The tooth pitch corresponds to a distance between a given location one of the teeth of the toothed surface to a location corresponding to the given location on an adjacent one of the teeth of the toothed surface.

Alternatively, instead of calculating the distance traveled by each track 22a and 24a, the controller 36, 136 may establish if there is a difference in their displacement by comparing just the counted number of teeth that were detected by sensors 32 and 34 while the slat is displaced between two positions. If the teeth counter between track 22a and 24a exceeds a predetermined value, the controller takes action by either warning the crew, or shutting down the system. The comparison of the number of teeth detected by the sensors can be done between the inboard and outboard tracks of the same slat surface, or between the inboard tracks and the outboard tracks respectively of two slap panels located on the left and right wings 5 and 5', located symmetrically from the fuselage centerline.

In a particular embodiment, the inboard and outboard signals vary in a sinusoidal manner between a maximum value and a minimum value. Determining the inboard and outboard numbers of teeth includes determining inboard and outboard numbers of cycles of the inboard and outboard signals.

In a particular embodiment, for operating the skew detection system 30, 130, the inboard signal is received from the inboard sensor 32 and the outboard signal is received from the outboard sensor 34. The inboard number of teeth of the gear of the inboard gears 22d that cross the line of sight 32a of the inboard sensor 32 is counted using the inboard signal and the outboard number of teeth of the gear of the outboard gears 24d that cross the line of sight 34a of the outboard sensor 34 is counted using the outboard signal. One of the inboard and the outboard number of teeth is compared with the reference value. An alert indicative of an adverse situation is emitted if the one of the inboard and the outboard number of gear teeth is different than the reference value.

Referring more particularly to Fig. 2, the reference value is the other of the inboard and the outboard numbers of teeth, and comparing the one of the inboard and the outboard numbers of teeth with the reference value includes comparing the one of the inboard and the outboard numbers of teeth with the other of the inboard and the outboard numbers of teeth.

Referring more particularly to Fig. 3, the reference value is a corresponding one of inboard and outboard numbers of teeth travelled by a corresponding one of inboard and outboard tracks 22a', 24a' of another slat 20' of the other of the wings 5, 5'. As shown, the step of comparing the one of the inboard and the outboard numbers of teeth with the reference value includes comparing the one of the inboard and the outboard numbers of teeth with the corresponding one of the inboard and the outboard numbers of teeth.

Referring more particularly to Fig. 4, the inboard gears 22d include a rack gear 22e and a pinion gear 22f meshed with the rack gear 22e, and counting the inboard number of teeth of the toothed surface of the gear of the inboard gears 22d includes counting the number of teeth of the rack gear 22e.

For counting the number of teeth, the signal received by any of the sensors 32, 34. 32', 34' is analysed by the controller 36, 136; the controller 36, 136 may increment a counter each time a magnitude of the signal reaches a given threshold indicative of the line of sight 32a, 34a intersecting either one of the gap between two consecutive teeth of the toothed surface or an apex of a teeth. The given threshold may be determined by calibration of the sensor once installed in its final location (e.g., on the wing). In a particular embodiment, the signal received from the respective sensor indicates the passing of a tooth in the sensing field of the sensor.

In a particular embodiment, the controller 36, 136 issues an alert indicative of an adverse situation (e.g., slat skewing; slat asymmetry) if a difference between the distances and/or the number of teeth exceeds a given threshold. Having such a threshold may allow the controller to avoid issuing an alert when the difference between the distances and/or the number of teeth results from a play created by a meshing engagement of the gears and/or a play of one of the gears on its axle. In some embodiments, when the difference between the distance or number of teeth reading is excessive, the controller may take the action to shut the system down.

In a particular embodiment, the controller 36, 136 is able to determine a skewing angle of the slat 20 based on the inboard and outboard distances and/or inboard and outboard numbers of teeth. The skewing angle may be a function of said distances and/or numbers of teeth and of a distance from a connection point of the inboard track 22a with the slat 20 to a connection point of the outboard track 24a with the slat 20.

In a particular embodiment, based on the sequence of 0 and 1 received from each sensor 32, 34, the controller 36, 136 can either count the number of sensor state changes between the moment when the slat started to move and a specific moment (this comes down to counting the number of teeth that passed in front of it), or calculate the total linear displacement of the associated track between the moment when the slat started moving and a specific moment. The latter may be achieved by multiplying the tooth count with the rack or pinion pitch (distance between two consecutive teeth). Since sensors 32, 34 are installed at both the inboard and outboard slat driving assemblies 22, 24 of the slat 20, the controller 30, 130 might know at any moment the magnitude of the displacement of the slat 20 at each of the two sides 20a, 20b, either in counts (0 to 1 changes) or in linear units.

In a particular embodiment, the disclosed skew detection systems 30, 130 allow the detection of any possible system disconnects that may lead to slat surface skew, including a disconnect at the rack and pinion interface, or disconnects inside a slat actuator. In a particular embodiment, the disclosed skew detection system avoids the need to add targets on the tracks; the targets being detectable by the sensors. Hence, the disclosed skew detection system might be simpler to implement than other skew detection systems at least because only the sensors and the controller are required and there is no requirement to install targets on the tracks. Moreover, the disclosed skew detection system might offer a better granularity in the measured distances travelled by the tracks at least because the sensors are able to detect very small variations in a movement of the tracks relative to the sensors.

Aspects and embodiments of the invention may be further understood with reference to the following, non-limiting numbered clauses:
1. A method of operating a system for detecting skewing of a control surface of an aircraft wing, the control surface connected to the wing via inboard and outboard tracks, the inboard and outboard tracks in driving engagement with inboard and outboard gears for moving the inboard and outboard tracks along longitudinal axes thereof, the method comprising:
   receiving an inboard signal from an inboard sensor and receiving an outboard signal from an outboard sensor, the inboard sensor having a line of sight intersecting a toothed surface of a gear of the inboard gears, the outboard sensor having a line of sight intersecting a toothed surface of a gear of the outboard gears;
   counting an inboard number of teeth of the gear of the inboard gears that cross the line of sight of the inboard sensor using the inboard signal and counting an outboard number of teeth of the gear of the outboard gears that cross the line of sight of the outboard sensor using the outboard signal;
   comparing one of the inboard and the outboard number of teeth with a reference value; and
   emitting an alert indicative of an adverse situation if the one of the inboard and the outboard number of gear teeth is different than the reference value.
2. The method of clause 1, wherein the reference value is the other of the inboard and the outboard numbers of teeth, and comparing the one of the inboard and the outboard numbers of teeth with the reference value includes comparing the one of the inboard and the outboard numbers of teeth with the other of the inboard and the outboard numbers of teeth.
3. The method of clause 1, wherein the reference value is a corresponding one of inboard and outboard numbers of teeth travelled by a corresponding one of inboard and outboard tracks of another control surface of the other of the wings, the control surface of the other of the wings and the control surface of the one of the wings being located at corresponding spanwise locations, the step of comparing the one of the inboard and the outboard numbers of teeth with the reference value including comparing the one of the inboard and the outboard numbers of teeth with the corresponding one of the inboard and the outboard numbers of teeth.
4. The method of any one of clauses 1 to 3, where the inboard gears include a rack gear and a pinion gear meshed with the rack gear, and counting the inboard number of teeth of the toothed surface of the gear of the inboard gears includes counting the number of teeth of the rack gear.
5. The method of any one of clauses 1 to 4, wherein the inboard and outboard signals vary in a sinusoidal manner between a maximum value and a minimum value, and determining the inboard and outboard numbers of teeth including determining inboard and outboard numbers of cycles of the inboard and outboard signals.

The above description is meant to be by way of example only, and one skilled in the art will recognize that changes may be made to the embodiments described without departing from the scope of the invention disclosed. Still other modifications which fall within the scope of the present invention will be apparent to those skilled in the art, in light of a review of this disclosure, and such modifications are intended to fall within the appended claims.

## Claims

1. A method of detecting skew in a control surface (20) of a first wing (5) of an aircraft (1), the control surface (20) being connected to the first wing (5) via inboard and outboard tracks (22a, 24a), the inboard and outboard tracks (22a, 24a) being in driving engagement with inboard and outboard gears (22c, 24c) for moving the inboard and outboard tracks along longitudinal axes thereof, the method comprising:
receiving an inboard signal from an inboard sensor (32) and receiving an outboard signal from an outboard sensor (34), the inboard sensor (32) having a line of sight intersecting a toothed surface (22d) of a gear of the inboard gears (22c), the outboard sensor (34) having a line of sight intersecting a toothed surface (24d) of a gear of the outboard gears (24c);
determining an inboard distance and an outboard distance travelled by the inboard and the outboard tracks (22a, 24a) respectively, using the inboard and outboard signals from the inboard and the outboard sensors (32, 34);
comparing one of the inboard and the outboard distances with a reference value; and
emitting an alert indicative of an adverse situation if the one of the inboard and the outboard distances is different from the reference value.

2. The method as claimed in claim 1, wherein the reference value is the other of the inboard and the outboard distances, and the step of comparing the one of the inboard and the outboard distances with the reference value includes comparing the one of the inboard and the outboard distances with the other of the inboard and the outboard distances.

3. The method as claimed in claim 1, wherein the reference value is a corresponding one of inboard and outboard distances travelled by a corresponding one of inboard and outboard tracks (22a', 24a') of another control surface (20') of a second wing (5') of the aircraft (1), the control surface (20') of the second wing (5') and the control surface (20) of the first wing (5) being located at corresponding spanwise locations, the step of comparing the one of the inboard and the outboard distances with the reference value including comparing the one of the inboard and the outboard distances with the corresponding one of the inboard and the outboard distances.

4. The method as claimed in any preceding claim, wherein determining the inboard distance and the outboard distance travelled by the inboard and outboard tracks (22a, 24a) respectively includes counting an inboard number of teeth of the toothed surface of the gear of the inboard gears (22c) that passes via the line of sight of the inboard sensor (32) and counting an outboard number of teeth of the toothed surface of the gear of the outboard gears (24c) that passes via the line of sight of the outboard sensor (34).

5. The method as claimed in claim 4, where the inboard gears (22c) include a rack gear (22e) and a pinion gear (22f) meshed with the rack gear (22e), and counting the inboard number of teeth of the toothed surface of the gear of the inboard gears (22c) includes counting the number of teeth of the rack gear (22e).

6. The method as claimed in any preceding claim, wherein determining the inboard distance and the outboard distance includes determining an inboard number of teeth and an outboard number of teeth that passes through the lines of sight and multiplying the inboard and outboard numbers of teeth by a tooth pitch.

7. The method as claimed in claim 6, wherein the inboard and outboard signals vary in a sinusoidal manner between a maximum value and a minimum value, and wherein determining the inboard and outboard numbers of teeth includes determining inboard and outboard numbers of cycles of the inboard and outboard signals.

8. A skew detection system for detecting skewing during movement of a control surface (20) of a first wing (5) of an aircraft (1), comprising:
inboard and outboard tracks (22a, 24a) each secured to a respective one of inboard and outboard sides of the control surface (20), the inboard and outboard tracks (22a, 24a) being configured for driving engagement with inboard and outboard gears (22c, 24c) for moving the control surface (20);
inboard and outboard sensors (32, 34) each secured to the wing (5) adjacent a respective one of the inboard side and the outboard side of the control surface (20), the inboard sensor (32) having a line of sight intersecting a toothed surface (22d) of a gear of the inboard gears (22c), the outboard sensor (34) having a line of sight intersecting a toothed surface (24d) of a gear of the outboard gears (24c), the inboard and outboard sensors (32, 34) being configured to generate signals indicative of the toothed surfaces (22d, 24d) moving through to the lines of sight; and
a controller (36) in communication with the inboard and outboard sensors (32, 34) and configured to receive the signals therefrom, the controller (36) being configured to:
determine an inboard distance and an outboard distance travelled by the toothed surfaces (22d, 24d) relative to the lines of sight of the inboard and outboard sensors (32, 34) from the signals;
compare one of the inboard distance and the outboard distance with a reference value; and
issue an alert indicative of an adverse situation when the one of the inboard distance and the outboard distance is different than the reference value.

9. The skew detection system as claimed in claim 8, wherein the reference value is the other of the inboard and the outboard distances.

10. The skew detection system as claimed in claim 8 or claim 9, wherein a second wing (5') of the aircraft has a control surface (20') located at a spanwise position thereon corresponding to that of the control surface (20) of the first wing (5), the skew detection system further comprising second inboard and outboard sensors (32', 34') each secured to the second wing (5') and adjacent a respective one of an inboard side and an outboard side of the control surface (20') of the second wing (5'), the second inboard sensor (32') having a line of sight intersecting a toothed surface of a gear of second inboard gears, the second outboard sensor (34') having a line of sight intersecting a toothed surface of a gear of second outboard gears, the second inboard gears and the second outboard gears being configured for driving engagement with inboard and outboard tracks (22a', 24a') of the control surface (20') of the second wing (5'), and the second inboard and outboard sensors (32', 34') being configured to generate signals indicative of the toothed surfaces moving relative to the lines of sight, the reference value being a corresponding one of a second inboard distance and a second outboard distance.

11. The skew detection system as claimed in any one of claims 8 to 10, wherein each of the inboard gears (22a) and the outboard gears (24a) includes a rack gear (22e) and a pinion gear (22f) in driving engagement with the rack gear (22e), the rack gears (22e) secured to the inboard and outboard tracks (22a, 24a), the pinion gears (22f) in driving engagement with actuators.

12. The skew detection system as claimed in claim 11, wherein the gear of the inboard gears (22c) and the gear of the outboard gears (24c) are the rack gears.

13. The skew detection system as claimed in any of claims 8 to 12, wherein the inboard and outboard sensors (32, 34) include two inboard sensors and two outboard sensors, the controller (36) being configured to receive signals from the two inboard sensors and from the two outboard sensors.

14. The skew detection system as claimed in claim 13, wherein each of the two inboard sensors (32) has a line of sight intersecting the toothed surface of the gear of the inboard gears (22a) and each of the two outboard sensors (34) has a line of sight intersecting the toothed surface of the gear of the outboard gears (24a).

15. The skew detection system as claimed in claim 13, wherein one of the two inboard sensors (32) has a line of sight intersecting the toothed surface of the gear of the inboard gears (22a), the other of the two inboard sensors has a line of sight intersecting a toothed surface of another gear of the inboard gears, one of the two outboard sensors (34) has a line of sight intersecting the toothed surface of the gear of the outboard gears (24a), and the other of the two outboard sensors has a line of sight intersecting a toothed surface of another gear of the outboard gears.
